# EUROPEAN PATENT SPECIFICATION

(11) **EP 2 128 468 B1**
(45) Date of publication and mention of the grant of the patent: **26.09.2018**
(21) Application number: 08721535.6
(22) Date of filing: 07.03.2008
(51) Int. Cl.: F16D 3/20, F16B 11/00, F16D 3/205, F16D 3/227, F16D 1/068

(54) **OUTER JOINT MEMBER FOR CONSTANT VELOCITY UNIVESAL JOINT**
ÄUSSERES VERBINDUNGSGLIED FÜR EIN HOMOKINETISCHES UNIVERSALGELENK
ELEMENT DE JOINT EXTERNE POUR JOINT HOMOCINETIQUE

(30) Priority: 20.03.2007 JP 2007073466
(43) Date of publication of application: 02.12.2009
(73) Proprietor: NTN Corporation, Osaka-shi, Osaka 550-0003 (JP)
(72) Inventor: NAKAGAWA, Naoki, Iwata-shi Shizuoka 438-8510 (JP); WATANABE, Yasuyuki, Kuwana-shi Mie 511-8678 (JP)
(74) Representative: Grünecker Patent- und Rechtsanwälte PartG mbB
(86) International application number: PCT/JP2008/054117
(87) International publication number: WO 2008/114623

(56) References cited:
- JP-A- 07 323 702
- JP-A- 10 281 172
- JP-A- 62 159 817
- JP-A- 2005 041 311
- JP-A- 2006 161 884
- JP-A- 2007 010 029

## Description

### Technical Field

The present invention relates to an outer joint member for a constant velocity universal joint and a manufacturing method therefor.

### Background Art

A constant velocity universal joint (tripod type constant velocity universal joint, for example) includes, as main components, an outer joint member, a tripod member serving as an inner joint member, and a roller serving as a torque transmitting member.

An example of the outer joint member is one including a bottomed cylindrical cup portion and a flange portion fitted onto the cup portion so as to protrude therefrom. Track grooves extending axially are formed at trisected positions in a circumferential direction of an inner periphery of the cup portion. An inner surface of the cup portion exhibits, when viewed at a section orthogonal to the axial direction, a non-cylindrical shape in which large diameter portions and small diameter portions exist alternately. In the cup portion, the three track grooves extending axially are formed in an inner surface thereof by being provided with the large diameter portions and the small diameter portions.

In the case of forming the above-mentioned outer joint member, there is used, for example, a method in which the cup portion and the flange portion are integrally formed by cold forging or hot forging (Patent Document 1). Further, as illustrated in FIG. 6, there is also used a method in which the cup portion and the flange portion are formed as separate members (cup member 101 and flange member 102), and both the members are fixed by welding. Specifically, the flange member 102 is mounted to the cup member 101 by forming a protrusion 108 having a small diameter and protruding axially to a bottom portion 112 of the cup member 101, fitting (press-fitting) the flange member 102 onto the protrusion 108, and then welding one axial end of a fitting portion therebetween while forming a round welding track 118 as illustrated in FIG. 7. Patent Document 1: Patent Application Laid-open No. Hei 07-185730

### Disclosure of the Invention

### Problems to be solved by the Invention

In the method described in Patent Document 1, when adopting the cold forging, a degree of processing is high and hence it is difficult to mold the flange. When adopting the heat forging, it is necessary to provide a final inner dimension by performing a separate processing such as broaching after a forging step, and hence the number of manufacturing steps is increased. Further, in the case of performing a heat treatment after broaching, the broaching is conceivably performed by feed-backing the amount of deformation involved in the heat treatment. However, taking the processing mode of the broaching into consideration, it is difficult to perform feed back control.

Further, in the method in which the cup portion and the flange portion are fixed by welding, treatment of a bead portion 113 (welding trace formed on the welded portion) formed as a result of the welding becomes a problem. That is, the bead portion 113 is normally raised with respect to a surface of a base material, and hence, when the bead portion 113 protrudes from an end surface 111 (mounting end surface) for mounting the flange portion 102 to other member, the other member cannot be mounted with accuracy to the mounting end surface 111. In this case, it is necessary to eliminate a raise of the bead portion 113 by post-processing such as cutting. Therefore, cutting step is required, thereby leading to a disadvantage that the number of processing steps and manufacturing cost are increased.

In view of the above-mentioned problems, the present invention provides an outer joint member for a constant velocity universal joint, which can be manufactured at low cost.

### Means for solving the Problems

An outer joint member for a constant velocity universal joint according to the present invention includes:
a cup member having a bottom portion at one axial end thereof; and
a flange member mounted to the cup member,
   the cup member being provided with a protrusion having a small diameter at the one axial end thereof, the flange member being fitted to an outer diameter surface of the protrusion, and the flange member having an inside surface which is bonded to the outer diameter surface of the protrusion by welding. Arelief portion into which molten metal flows is formed in a fitting portion between an outer surface of the cup member and the inside surface of the flange member.

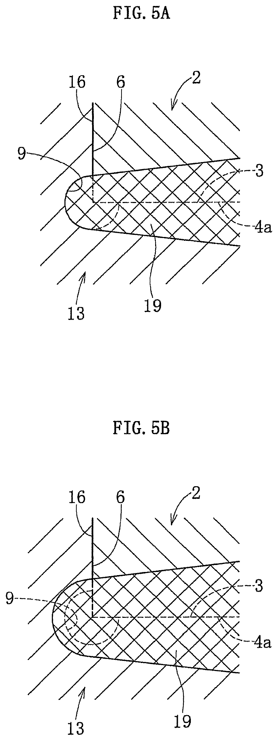

In the outer joint member for the constant velocity universal joint according to the present invention, at the time of welding of the cup member and the flange member, the molten metal flows into the relief portion provided in the fitting portion between the outer surface of the cup member and the inside surface of the flange member. This inflow of the molten metal occurs when, as illustrated in FIG. 5A, the base material is melted in part of a contour of the relief portion 9 and the molten metal 19 flows into the remained relief portion 9, or when, as illustrated in FIG. 5B, the base material is melted in a region including the entire contour of the relief portion 9 and the molten metal flows into a region where the relief portion has once existed. In both the cases, the molten metal is received in the relief portion by the volume thereof. Therefore, the raise of the bead portion generated after the welding can be reduced or eliminated. As a result, it is possible to simplify or omit elimination process of the bead portion, and hence it is possible to make the manufacturing cost of the outer joint member low.

By providing the relief portion in another axial end of the fitting portion, a welding depth becomes deeper, and hence welding strength can be increased.

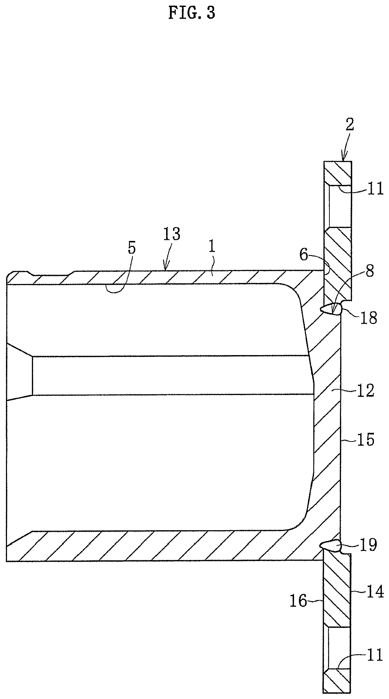

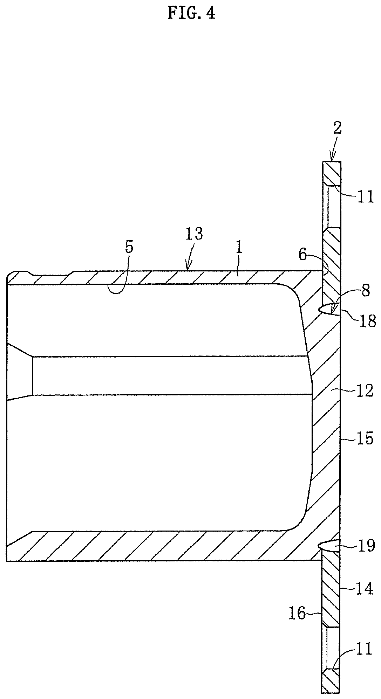

Two modes can be exemplified as a mode of the flange member. One is a mode in which the inside portion thereof is thinned, and one axial end of the fitting portion is positioned on a side of the another axial end with respect to the mounting end surface, which is to be mounted to other member, of the flange member (FIG. 3) . The other is a mode in which the inside portion has a uniform thickness over the entire portion in the radial direction thereof (FIG. 4) . The former has an advantage that, even when the bead portion is slightly raised from a surface of the base material after welding, elimination process thereof is not required. The latter has a merit that the inside portion of the flange is not required to be processed, and a press-molded product can be used without processing, and hence the flange member can be manufactured at low cost.

In both the modes, by setting a protruding amount of the bead portion from the mounting end surface to be zero, it is possible to mount other member to the mounting end surface with accuracy. It suffices that the protruding amount of the bead portion with respect to the mounting end surface is zero. That is, the state in which the protruding amount is zero includes a case in which a tip end of the bead portion is on the same level with the mounting end surface, and the case in which it is positioned at the another axial end side and a side of the cup member opening with respect to the mounting end surface.

It is preferable that a curvature radius R of the relief portion be 0.2 mm or more to 1 mm or less, and a groove depth be 0.05 mm or more to 2/3 R or less.

As welding, it is possible to adopt laser welding or electron beam welding. The laser welding is a method in which a laser beam as a heat source is radiated in a condensed state on mainly metal, thereby locally fusing and solidifying the metal to perform bonding. The electron beam welding is a method in which a filament is heated in a high vacuum, and ejected electrons are accelerated by high voltage, focused by an electromagnetic coil, and caused to collide with the portion to be welded, thereby converting kinetic energy of the electron beam to heat energy to perform welding.

### Effects of the Invention

According to the present invention, it is possible to suppress or prevent the bead portion from raising from the surface of the base material. Therefore, it is possible to reduce the number of steps of post-processing for eliminating the raise of the bead portion, or to omit the post-processing itself, whereby the outer joint member can be reduced in cost.

By setting the protruding amount of the bead portion from the mounting end surface of the flange member to be zero, a mating member can be mounted with accuracy to the mounting end surface of the flange member.

A similar outer joint member for a constant velocity joint is known from JP 2005 041311 A.

FIG. 1 is a sectional view of an outer joint member before welding, illustrating an embodiment of the present invention;
FIG. 2 is a rear view of the outer joint member of FIG. 1;
FIG. 3 is a sectional view of the outer joint member, illustrating the embodiment of the present invention;
FIG. 4 is a sectional view of an outer joint member, illustrating a second embodiment of the present invention;
FIG. 5A is an enlarged sectional view of a welded portion;
FIG. 5B is a sectional view illustrating a modification example of the welded portion;
FIG. 6 is a sectional view of a conventional outer joint member; and

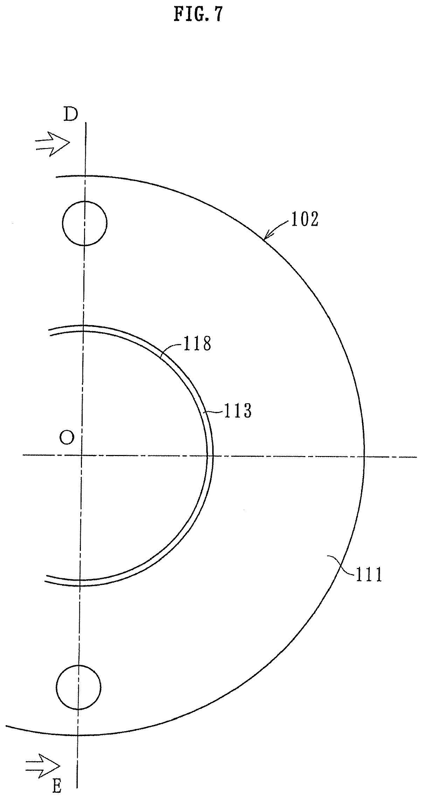

FIG. 7 is a rear view of the conventional outer joint member.

### Description of Symbols

- 1: body portion
- 2: flange member
- 3: outer diameter surface
- 4a: small diameter inside surface
- 4b: large diameter inside surface
- 8: protrusion
- 9: relief portion
- 12: bottom portion
- 13: cup member
- 14: mounting end surface
- 18: bead portion
- S: space

### Best Mode for carrying out the Invention

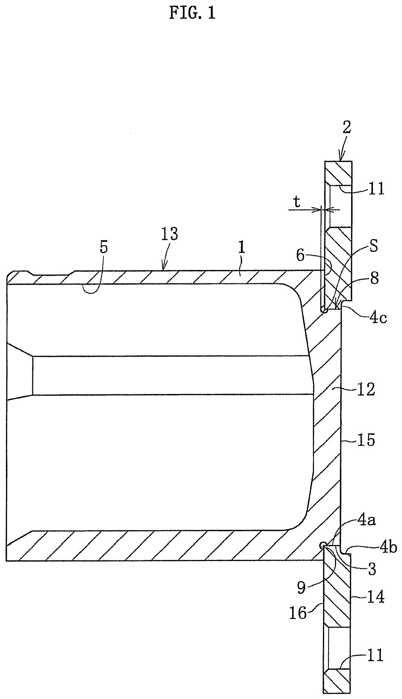

With reference to FIGS. 1 to 4, description is made of a first embodiment of an outer joint member for a constant velocity universal joint according to the present invention.

A constant velocity universal joint (tripod type constant velocity universal joint, for example) includes, as main components, an outer joint member, a tripod member which is provided on an inner surface side of the outer joint member and serves as an inner joint member, and a roller serving as a torque transmitting member. The constant velocity universal joint is of a plunging type which allows a relative axial movement between the outer joint member and the inner joint member, which is used as a constant velocity universal joint arranged, for example, at an inboard side (central side of a vehicle body in a vehicle width direction) of a drive shaft of an automobile.

As illustrated in FIG. 3, the outer joint member includes a cup member 13 having a tubular body portion 1 and a bottom portion 12 closing an opening on one end side in the axial direction of the body portion 1, and a ring-shaped flange member 2 mounted to the bottom portion 12 of the cup member 13. Three track grooves 5 extending axially are formed in an inner surface of the cup member 13, whereby large diameter portions and small diameter portions are formed alternately at a section orthogonal to the axial direction of the inner surface of the cup member 13. Note that, in the following description, regarding the axial direction, a side provided with the bottom portion 12 of the cup member 13 is referred to as "one axial end ", and a side provided with the opening of the cup member 13 is referred to as "the other axial end".

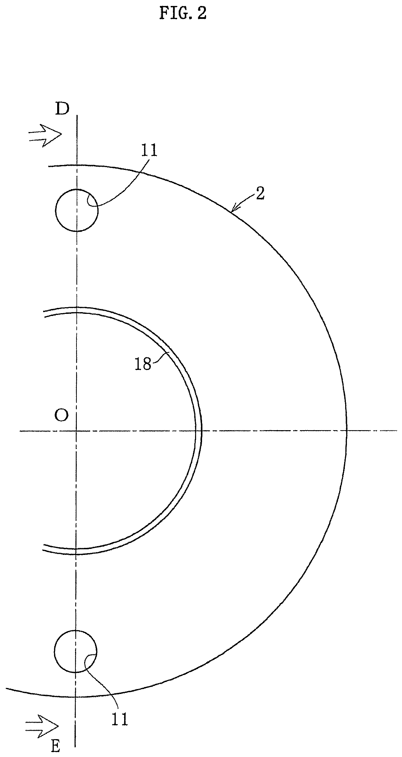

As illustrated in FIG. 2, the flange member 2 is a flat ring-shaped disk, in which through-holes 11 are provided with a predetermined pitch (180°, for example) along a circumferential direction. A bolt or the like is screwed in each of the through-holes 11, whereby the outer joint member can be fixed to other member such as a differential. An inside portion of the flange member 2 is thinner than an outside portion thereof. An inside surface of the flange member 2 includes a small diameter inside surface 4a and a large diameter inside surface 4b, the large diameter inside surface 4b being formed on the one axial side with respect to the small diameter inside surface 4a. A shoulder surface 4c between the small diameter inside surface 4a and the large diameter inside surface 4b is flush with an end surface 15 of the bottom portion 12 of the cup member 13. For example, the flange member 2 can be manufactured by eliminating, after being press-molded, a corner portion on one axial side of the inside portion by turning or the like.

On the bottom portion 12 of the cup member 13, there is formed, by turning or the like, a cylindrical protrusion 8 protruding on the one axial side and having an outer diameter dimension which is smaller than that of other portions. The axial dimension of the protrusion 8 is smaller than a minimum thickness of the bottom portion 12 . A shoulder surface 6 extending radially is formed between the outer surface of the body portion 1 of the cup member 13 and an outer diameter surface 3 of the protrusion 8 . Between the shoulder surface 6 and the outer diameter surface 3 of the protrusion 8, a groove-shaped relief portion 9 having a partially-arc like section is formed over the entire periphery by turning or the like.

Next, there is described a method for bonding the cup member 1 and the flange member 2 together in the outer joint member having the above-mentioned structure. First, the cup member 13 is arranged so that the opening thereof is directed downward. Then, the flange member 2 is fitted onto the protrusion 8 of the cup member 13, and the shoulder surface 6 of the cup member 13 and an end surface 16 on the other axial side of the flange member 2 are brought into close contact with each other. As a result, the relief portion 9 constitutes a space S divided by the small diameter inside surface 4a and the end surface 16 on the other axial end of the flange member 2. Next, a welding heat source (laser, electric beam, for example) is radiated toward the one axial end between the outer diameter surface 3 of the protrusion 8 and the small diameter inside surface 4a of the flange member 2, and the welding heat source is moved clockwise, for example. As a result, a bead portion 18 as a welding track exhibits a circular shape as illustrated in FIG. 2. By this welding, a fitted region including the small diameter inside surface 4a of the flange member 2 and the outer diameter surface 3 of the protrusion 8 is melted, thereby integrating the flange member 2 and the cup member 13 together. As illustrated in FIG. 5A, during the welding, a contour of the relief portion 9 is partially melted, whereby molten metal 19 flows into the remained relief portion 9, and hence the relief portion is filled with the molten metal 19. Apart from this, as illustrated in FIG. 5B, a base material may be melted in a region including the entire contour of the relief portion 9.

In this manner, in the outer joint member for the constant velocity universal joint according to the present invention, the molten metal flows into the relief portion 9 provided to the fitting portion between the cup member 13 and the flange member 2. Therefore, it is possible to suppress a raise of the bead 18 by the capacity of the relief portion 9a. In addition, the inside portion of the flange member 2 is formed so as to be thinner in the axial direction, and the axial one end of the fitting portion between the small diameter inside surface 4a and the outer diameter surface 3 of the protrusion 3 is provided on the other axial end with respect to a mounting end surface 14 of the flange member 2. With this structure, it is possible to prevent the bead portion 18 from protruding from the mounting end surface 14 of the flange member 2, thereby enabling a mating member to be mounted with accuracy to the mounting end surface 14 of the flange member 2. In this case, it is possible to simplify or omit a turning step of the bead portion 18, and hence the manufacturing cost of the product (outer joint member) can be reduced.

It is preferable to set a curvature radius of the relief portion 9 to be 0.2 mm or more to 1 mm or less, and to set a depth t to be 0.05 or more to 2/3R or less. When R is less than 0.2 and a groove depth t is less than 0.05 mm, the molten metal does not flow into the space S, and hence the bead portion 18 is raised on the surface of the welded portion. When R exceeds 1 mm and the groove depth t exceeds 2/3R, the amount of molten metal flowing into the relief portion is too large to ensure a welding area (volume) necessary for providing the strength of the welded portion.

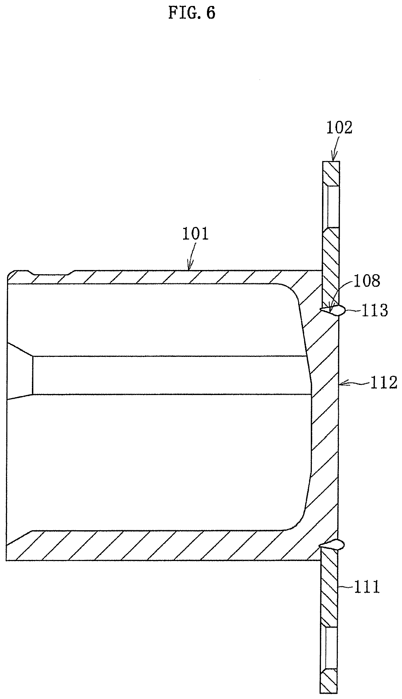

Next, a second embodiment of the present invention is illustrated in FIG. 4. In the first embodiment illustrated in FIGS. 1 to 3, the thickness of the inside portion of the flange member 2 is smaller than that of the outside portion. However, in the second embodiment, the thickness of the flange member 2 is uniform over the entire portion thereof. The mounting end surface 14 of the flange member 2 and the end surface 15 of the bottom portion 12 of the cup member 13 are provided so as to be flush with each other. The mounting of the flange member 2 according to the second embodiment can be performed in the same manner as in the mounting of the flange member 2 according to the first embodiment. Even when the bead portion 18 after welding is raised, the raised portion is eliminated by post-processing such as cutting, whereby the surface of the bead portion 18 can be set on the same level with the mounting end surface 14 of the flange member 2. As a result, it is possible to ensure mounting accuracy with respect to the mating member. In this case, by the amount of the molten metal received in the relief portion 9, the raised amount becomes smaller in comparison with the conventional structure illustrated in FIG. 6, and hence cost of post-processing can be reduced. Needless to say, if the bead portion 18 is not raised with respect to the mounting end surface 14 after welding, this kind of post-processing is unnecessary.

In the structure according to the second embodiment, the flange member 2 has a simple shape of flat plate, which can be simplified in comparison with that according to the first embodiment. Therefore, the flange member 2 can be manufactured not by cutting or the like but by a low-cost processing such as pressing. Further, welding strength comparable as that in the first embodiment can be ensured even when the axial thickness of the entire flange member 2 is reduced, whereby the flange member 2 can be reduced in weight and material cost. Note that, in the outer joint member for the constant velocity universal joint illustrated in FIG. 4, the same components as those of the outer joint member for the constant velocity universal joint illustrated in FIGS. 1 to 3 are denoted by the same reference numerals as those in FIGS. 1 to 3, and description thereof is omitted.

The embodiments of the present invention are described above. However, the present invention is not limited to the above-mentioned embodiments, and can be modified variously. For example, the relief portion 9 is not limited to be formed continuously over the entire periphery of the fitting portion, and may be formed intermittently in the circumferential direction. Further, the shape thereof is not limited to the groove-shape. The sectional shape of the relief portion 9 is also arbitrary, and it is also possible to form the relief portion 9 having other sectional shape other than the partially-arc shape. Further, the relief portion 9 may be provided not only on the cup member 13 side but also on the flange member 2 side (for example, a chamfer is provided to a corner portion on the one axial side of the inside surface of the flange member 2, and the chamfer constitutes the relief portion) . Further, welding may be performed not only by moving a welding heat source side (welding rod side), but also by rotating the outer joint member side while radiating the welding heat source on a fixed point.

### Industrial Applicability

The constant velocity universal joint is not limited to the tripod type constant velocity universal joint. The present invention is also applicable to other joint system, such as other plunging type constant velocity universal joint including a double offset type one, and even a constant velocity universal joint including a birfield type one as long as it includes a flange portion on an outer joint member.

## Claims

1. An outer joint member for a constant velocity universal joint, comprising:
a cup member (13) having a bottom portion (12) at one axial end thereof; and
a flange member (2) mounted to the cup member (13),
the cup member (13) being provided with a protrusion (8) having a small diameter at the one axial end thereof, the flange member (2) being fitted to an outer diameter surface (3) of the protrusion (8), and the flange member (2) having an inside surface (4a) which is bonded to the outer diameter surface (3) of the protrusion (8) by welding,
**characterized in that** said welding being performed by radiating a welding heat source toward the one axial end of a fitting portion between the outer diameter surface (3) of the protrusion (8) and the inside surface (4a) of the flange member (2),
wherein the flange member (2) has a mounting end surface (14) provided on the one axial end thereof for mounting the flange member (2) to another member, and
wherein a relief portion (9) into which molten metal flows is formed in another axial end of the fitting portion.

2. An outer joint member for a constant velocity universal joint according to Claim 1, wherein:
an inside portion of the flange member (2) is thinned; and
one axial end of the fitting portion is positioned on a side of another axial end with respect to a mounting end surface (16), which is to be mounted to other member, of the flange member (2).

3. An outer joint member for a constant velocity universal joint according to Claim 1, wherein the flange member (2) has a uniform thickness.

4. An outer joint member for a constant velocity universal joint according to Claim 2, wherein a protruding amount of a bead portion from the mounting end surface (16) is set to be zero.

5. An outer joint member for a constant velocity universal joint according to any one of Claims 1 to 4, wherein a curvature radius R of the relief portion (9) is set to 0.2 mm or more to 1 mm or less, and a depth is set to 0.05 mm or more to 2/3R or less.

## Patentansprüche

1. Ein äußeres Gelenkelement für ein universelles homokinetisches Gelenk, umfassend:
ein Topfelement (13), das einen Bodenabschnitt (12) an einem axialen Ende davon aufweist; und
ein Flanschelement (2), das an dem Topfelement (13) angebracht ist,
wobei das Topfelement (13) an einem axialen Ende davon mit einem Vorsprung (8) ausgebildet ist, der einen geringen Durchmesser aufweist, wobei das Flanschelement (2) an eine Außendurchmesserfläche (3) des Vorsprungs (8) gepasst ist, und das Flanschelement (2) eine Innenfläche (4a) aufweist, die mit der Außendurchmesserfläche (3) des Vorsprungs (8) durch Schweißen verbunden ist,
**dadurch gekennzeichnet, dass** das Schweißen ausgeführt wird, indem eine Schweiß-Wärmequelle in Richtung des einen axialen Endes eines Passesabschnitts zwischen der Außendurchmesserfläche (3) des Vorsprungs (8) und der Innenfläche (4a) des Flanschelements (2) ausgestrahlt wird,
wobei das Flanschelement (2) eine Montage-Endfläche (14) aufweist, die an dem einen axialen Ende davon bereitgestellt ist, um das Flanschelement (2) an einem anderen Element anzubringen, und
wobei ein Aussparungsabschnitt (9), in welchen geschmolzenes Metall fließt, in einem anderen axialen Ende des Passabschnitts ausgebildet ist.

2. Ein äußeres Gelenkelement für ein universelles homogenetisches Gelenk gemäß Anspruch 1, wobei:
ein Innenabschnitt des Flanschelements (2) verdünnt ist; und
ein axiales Ende des Passabschnitts an einer Seite eines anderen axialen Endes bezüglich einer Montage-Endfläche (16) des Flanschelements (2), die an einem anderen Element anzubringen ist, angeordnet ist.

3. Ein äußeres Gelenkelement für ein universelles homogenetisches Gelenk gemäß Anspruch 1, wobei das Flanschelement (2) eine einheitliche Dicke aufweist.

4. Ein äußeres Gelenkelement für ein universelles homogenetisches Gelenk gemäß Anspruch 2, wobei ein Vorsprungsbetrag eines Schweißabschnitts von der Montage-Endfläche (16) so eingestellt ist, dass er Null beträgt.

5. Ein äußeres Gelenkelement für ein universelles homokinetisches Gelenk gemäß einem der Ansprüche 1 bis 4, wobei ein Krümmungsradius R des Aussparungsabschnitts (9) auf 0,2 mm oder mehr bis 1 mm oder weniger eingestellt ist und eine Tiefe auf 0,05 mm oder mehr bis 2/3 R oder weniger eingestellt ist.

## Revendications

1. Elément de joint externe pour un joint homocinétique, comprenant:
un élément de coupelle (13) ayant une partie inférieure (12) à une extrémité axiale de celui-ci; et
un élément de bride (2) monté sur l'élément de coupelle (13),
l'élément de coupelle (13) étant muni d'une protubérance (8) ayant un petit diamètre à l'une de ses extrémités axiales, l'élément de bride (2) étant ajusté à une surface de diamètre externe (3) de la protubérance (8), et l'élément de bride (2) ayant une surface intérieure (4a) qui est liée à la surface de diamètre externe (3) de la protubérance (8) par soudage,
**caractérisé en ce que** ledit soudage est effectué en irradiant une source de chaleur de soudage vers l'extrémité axiale d'une partie de raccord entre la surface de diamètre externe (3) de la protubérance (8) et la surface intérieure (4a) de l'élément de bride (2),
dans lequel l'élément de bride (2) a une surface d'extrémité de montage (14) prévue sur l'une de ses extrémités axiales pour monter l'élément de bride (2) sur un autre élément, et
dans lequel une partie en relief (9) dans laquelle s'écoule du métal fondu est formée dans une autre extrémité axiale de la partie de raccord.

2. Elément de joint externe pour un joint homocinétique selon la revendication 1, dans lequel:
une partie intérieure de l'élément de bride (2) est amincie; et
une extrémité axiale de la partie de raccord est positionnée sur un côté d'une autre extrémité axiale par rapport à une surface d'extrémité de montage (16), qui doit être montée sur un autre élément, de l'élément de bride (2).

3. Elément de joint externe pour un joint homocinétique selon la revendication 1, dans lequel l'élément de bride (2) a une épaisseur uniforme.

4. Elément de joint externe pour un joint homocinétique selon la revendication 2, dans lequel une quantité en protubérance d'une partie de talon à partir de la surface d'extrémité de montage (16) est réglée sur zéro.

5. Elément de joint externe pour un joint homocinétique selon l'une quelconque des revendications 1 à 4, dans lequel un rayon de courbure R de la partie en relief (9) est réglé sur une valeur comprise entre 0,2 mm ou plus et 1 mm ou moins et une profondeur est réglée sur valeur comprise entre 0,05 mm ou plus et 2/3R ou moins.
